# EUROPEAN PATENT APPLICATION

(11) **EP 1 536 117 A2**
(43) Date of publication of application: **01.06.2005**
(21) Application number: 04257274.3
(22) Date of filing: 24.11.2004
(51) Int. Cl.: F02C 5/11

(54) **Pulse detonation power system and plant with fuel preconditioning**

(30) Priority: 25.11.2003 US 723319
(71) Applicant: GENERAL ELECTRIC COMPANY, Schenectady, NY 12345 (US)
(72) Inventor: Dean, Anthony John, Scotia, New York 12302 (US); Leyva, Ivett Alejandra, Los Angeles, California 90066 (US)
(74) Representative: Pedder, James Cuthbert

(57) **Abstract**

A power system (100) includes a fuel pre-conditioner (20) adapted to convert a fuel to at least one conditioned fuel, a pulse detonation combustor (10), and a turbine (30). The pulse detonation combustor is adapted to receive the conditioned fuel and a primary oxidizer and to detonate a mixture including the conditioned fuel and the primary oxidizer and exhaust a number of detonation products. The turbine is positioned downstream from and in flow communication with the pulse detonation combustor (10). A power plant (300) includes at least one fuel pre-conditioner (20) and a number of power systems (100). Each power system includes a pulse detonation combustor (10) and a turbine (30) positioned downstream from and in flow communication with the pulse detonation combustor (10).

## Description

The invention relates generally to simple and combined cycle power systems and, more particularly, to simple and combined cycle power systems using pulse detonations.

A primary objective in power system design is increased efficiency, for both simple cycle and combined cycle systems. However, to achieve high cycle efficiencies, both the pressure ratio and the working temperature must be as high as materials and cooling technology permit. Presently, high-pressure ratios are achieved using complex high-pressure compressors and turbines, which help to compensate for the four to seven percent (4-7%) pressure loss that results from conventional combustion processes. However, these systems involve numerous pieces of complex rotating machinery.

Recently, efforts have begun to explore the use of pulse detonation engines in aircraft engines. Beneficially, pulse detonation engines produce a pressure rise from a series of repeating detonations. However, fuels burned in conventional power plants, such as natural gas and distillate fuels, are difficult to detonate. Accordingly, using existing pulse detonation technology, such fuels would typically require the use of pre-detonation tubes, explosive charges or high-energy capacitive spark discharges to initiate detonation.

Accordingly, it would be desirable to develop a power system that uses pulse detonations to enhance cycle efficiency. It would also be desirable to enhance the detonatability of the fuel being detonated in the power system.

Briefly, in accordance with one embodiment of the present invention, a power system embodiment is provided. The power system includes a fuel pre-conditioner adapted to convert a fuel to at least one conditioned fuel. A pulse detonation combustor is adapted to receive the conditioned fuel and a primary oxidizer and to detonate a mixture comprising the conditioned fuel and the primary oxidizer and exhaust a plurality of detonation products. A turbine is positioned downstream from the pulse detonation combustor, the turbine being in flow communication with the pulse detonation combustor.

A power plant embodiment is also provided. The power plant includes at least one fuel pre-conditioner and a number of power systems. Each of the power systems includes a pulse detonation combustor and a turbine positioned downstream from the respective pulse detonation combustor, the turbine being in flow communication with the pulse detonation combustor.

The invention will now be described in greater detail, by way of example, with reference to the drawings, in which:-
FIG. 1 shows a power system embodiment of the invention;
FIG. 2 illustrates several fuel preconditioning techniques to enhance detonability of a fuel for the power system of Figure 1;
FIG. 3 shows a combined cycle power system of the invention;
FIG. 4 illustrates another power system embodiment of the invention that incorporates reforming;
FIG. 5 shows a power system that includes a reformer;
FIG. 6 shows another power system that includes a reformer;
FIG. 7 shows an exemplary power plant embodiment of the invention;
FIG. 8 shows another configuration of the power plant;
FIG. 9 illustrates an exemplary combined cycle power plant embodiment of the invention;
FIG. 10 shows another power system embodiment that includes an Oxygen enrichment unit; and
FIG. 11 shows another combined power system embodiment of the invention that includes a reformer.

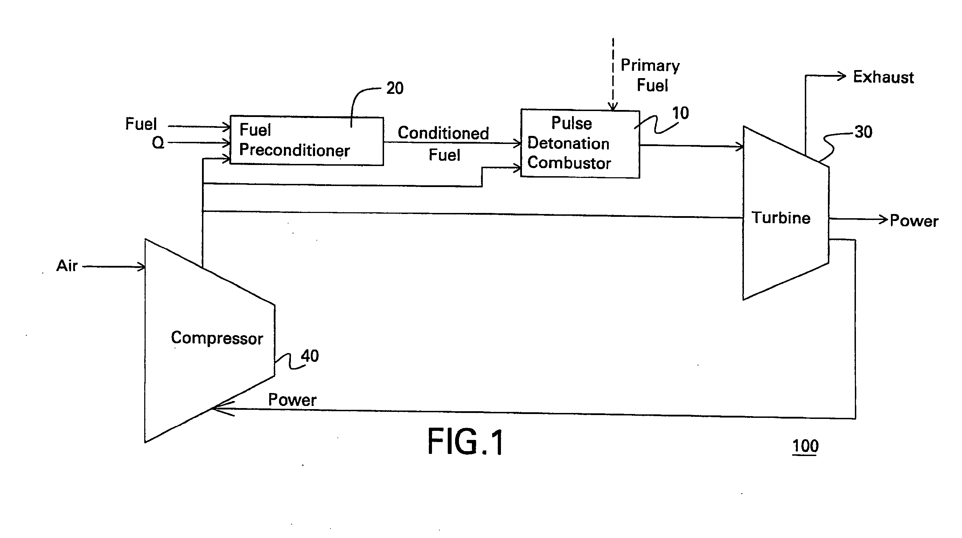

A first embodiment is described with respect to Figure 1. As shown, the power system 100 includes a fuel pre-conditioner 20, which is adapted to convert a fuel to at least one conditioned fuel. The "Q" in Figure 1 indicates the addition of energy to the pre-conditioner 20 via combustion/partial oxidation, electrical power, and/or heat. The power system 100 further includes a pulse detonation combustor 10, which is adapted to receive the conditioned fuel and a primary oxidizer, to detonate a mixture comprising the conditioned fuel and the primary oxidizer and to exhaust a number of detonation products. Exemplary oxidizers include air and compressed air. The power system 100 further includes a turbine 30 positioned downstream from the pulse detonation combustor 10 and in flow communication with the pulse detonation combustor 10.

As used herein, a "pulse detonation combustor" (or pulse detonation engine) is understood to mean any device or system that produces both a pressure rise and velocity increase from a series of repeating detonations or quasi-detonations within the device. A "quasi-detonation" is a supersonic turbulent combustion process that produces a pressure rise and velocity increase higher than the pressure rise and velocity increase produced by a deflagration wave. Typical embodiments of pulse detonation combustors include a means of igniting a fuel/oxidizer mixture, for example a fuel/air mixture, and a detonation chamber, in which pressure wave fronts initiated by the ignition process coalesce to produce a detonation wave. Each detonation or quasi-detonation is initiated either by external ignition, such as spark discharge or laser pulse, or by gas dynamic processes, such as shock focusing, auto-ignition or by another detonation (cross-fire). The geometry of the detonation chamber is such that the pressure rise of the detonation wave expels combustion products out the pulse detonation combustor exhaust to produce a thrust force. As known to those skilled in the art, pulse detonation may be accomplished in a number of types of detonation chambers, including detonation tubes, shock tubes, resonating detonation cavities and annular detonation chambers.

A primary objective in power system design is increased efficiency, for both simple cycle and combined cycle systems. However, to achieve high cycle efficiencies, both the pressure ratio and the working temperature must be as high as materials and cooling technology permit. Presently, high-pressure ratios are achieved using complex high-pressure compressors and turbines, which help to compensate for the four to seven percent (4-7%) pressure loss that results from conventional combustion processes. The power system 100 described above achieves pressure rise combustion by performing repeat detonations, in contrast to conventional constant pressure combustion processes. Consequently, high-pressure compressors are not needed to achieve the desired high pressures.

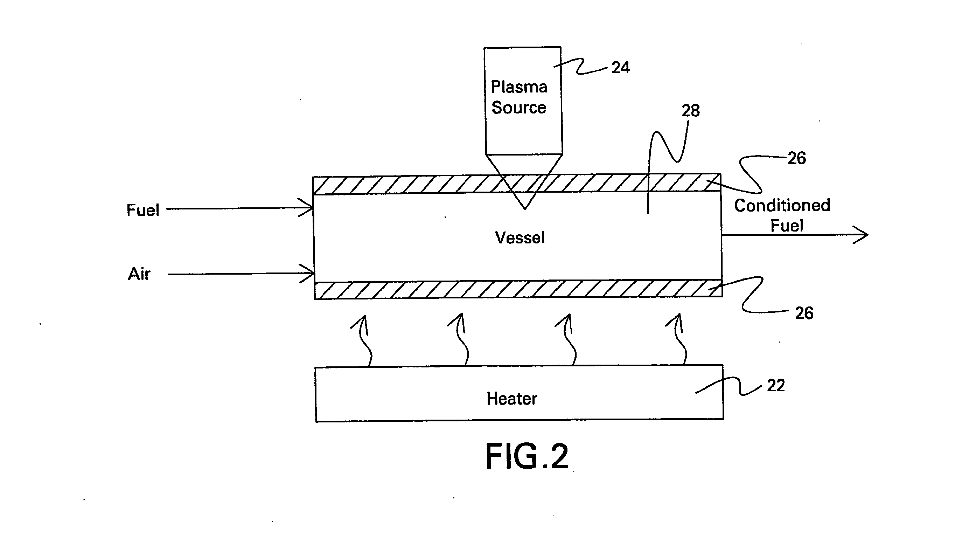

Heavy fuels, such as heavy hydrocarbons (C₆ and above) are difficult to detonate. Even relatively light fuels such as natural gas (CH₄) have large detonation initiation energies, typically requiring the use of pre-detonation tubes, explosive charges or high-energy capacitive spark discharges to initiate detonation. Beneficially, power system 100 includes a fuel pre-conditioner 20 for converting a fuel to at least one conditioned fuel, that is a more detonable fuel. For example, liquid hydrocarbon fuels may be converted to lighter fuels by fuel pre-conditioner 20. Exemplary fuels include hydrocarbon fuels, for example natural gas. One of the issues for natural gas is its large cell size. Accordingly, preconditioning natural gas, for example by reforming (reacting steam and natural gas to produce H2 or a combination of H2 and CO), enhances detonation initiation, thereby facilitating the direct use of natural gas, which is a readily available fuel. A number of preconditioning techniques may be employed to convert the fuel to a conditioned fuel, and Figure 2 illustrates several fuel preconditioning techniques. Although indicated in Figure 2, the use of air in the pre-conditioner 20 is optional, depending on the specific preconditioning technique being used. For example, pyrolysis excludes the use of air. According to one embodiment, the fuel pre-conditioner 20 includes a heat source 22, which is configured to heat the fuel in a vessel 22 so as to pyrolyze the fuel. The heat source may be a separate heater. Alternatively, the pulse detonation combustor 10 may be used as the heat source 22. For this latter embodiment, either direct heating from the pulse detonation combustor 10 may be employed or heat may be supplied by an intermediate fluid that is heated by the pulse detonation combustor 10. Another exemplary heat source is an exhaust stream from a turbine 30, which is discussed in greater detail below. For another embodiment, the fuel pre-conditioner 20 includes both the heat source 22 and a catalyst 26, which is adapted to enhance the pyrolysis of the fuel. The particular catalyst employed will vary depending on the type of fuel being pyrolyzed, and exemplary catalysts include a zeolite catalyst or a precious metal, such as platinum. According to another embodiment, the fuel pre-conditioner 20 includes a plasma source 24, which is configured to pyrolyze the fuel in a vessel 28. For yet another embodiment, the fuel pre-conditioner 20 comprises a catalyst 26, which is adapted to pyrolyze the fuel in vessel 28. Exemplary catalysts are described above.

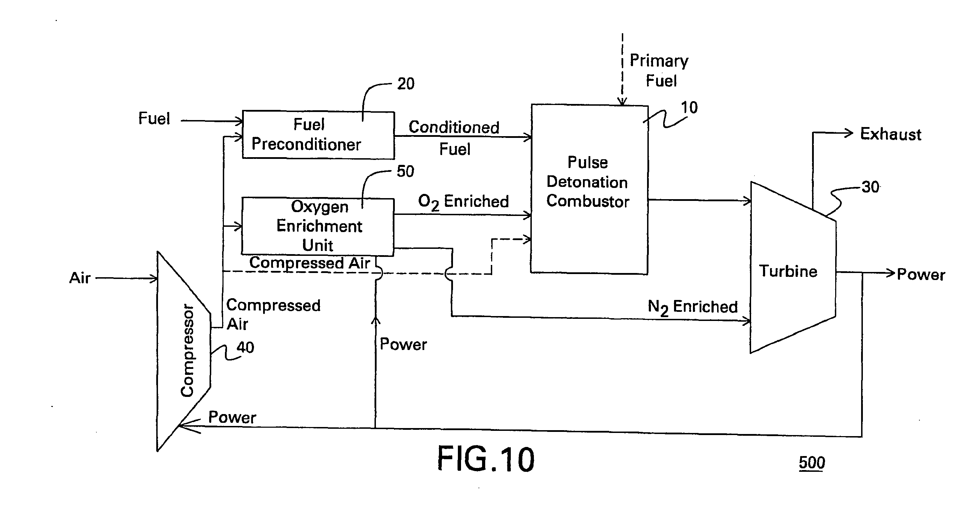

The pulse detonation combustor 10 may be adapted to detonate a mixture consisting of a primary oxidizer and the conditioned fuel from the fuel pre-conditioner 20. Alternatively, the mixture may consist of the primary oxidizer, for example compressed air, the conditioned fuel, and a second oxidizer, for example oxygen or an oxygen enriched stream, as discussed below with respect to Figure 10. The oxygen reduces the detonation energy of the overall mixture, thereby enhancing the detonation thereof. According to another embodiment, the pulse detonation combustor 10 is further adapted to receive a primary fuel and to detonate a mixture comprising the conditioned fuel, the primary fuel and the primary oxidizer and to exhaust the resulting detonation products. Exemplary primary fuels include hydrocabon fuels, such as natural gas, distillate fuels, and gasified solid fuel streams. Exemplary solid fuels for solid fuel streams include coal, agricultural products and wood. For example, the primary fuel may comprise an even lighter fuel, for example, hydrogen (H₂), to enhance detonation of the overall mixture. Alternatively, the primary fuel may be heavier than the conditioned fuel supplied by the fuel pre-conditioner 20. For this latter alternative, the conditioned fuel from the fuel pre-conditioner 20 is used to enhance the detonatability of the heavier primary fuel. For example, the conditioned fuel could be a CO and H₂ mixture, and the primary fuel could comprise natural gas (CH₄). Furthermore, although not expressly shown, a second oxidizer may also be included in the mixture being detonated, to enhance detonation of the conditioned fuel/primary oxidizer/primary fuel mixture.

For the particular embodiment illustrated by Figure 1, the power system 100 further includes a compressor 40 configured to supply air to at least one of the fuel preconditioner 20, the pulse detonation combustor, and the turbine 30. For example, the compressor 40 supplies compressed air to the pulse detonation combustor 10, with the primary oxidizer comprising the compressed air. The compressor 40 may be powered by the turbine 30, as indicated in Figure 1.

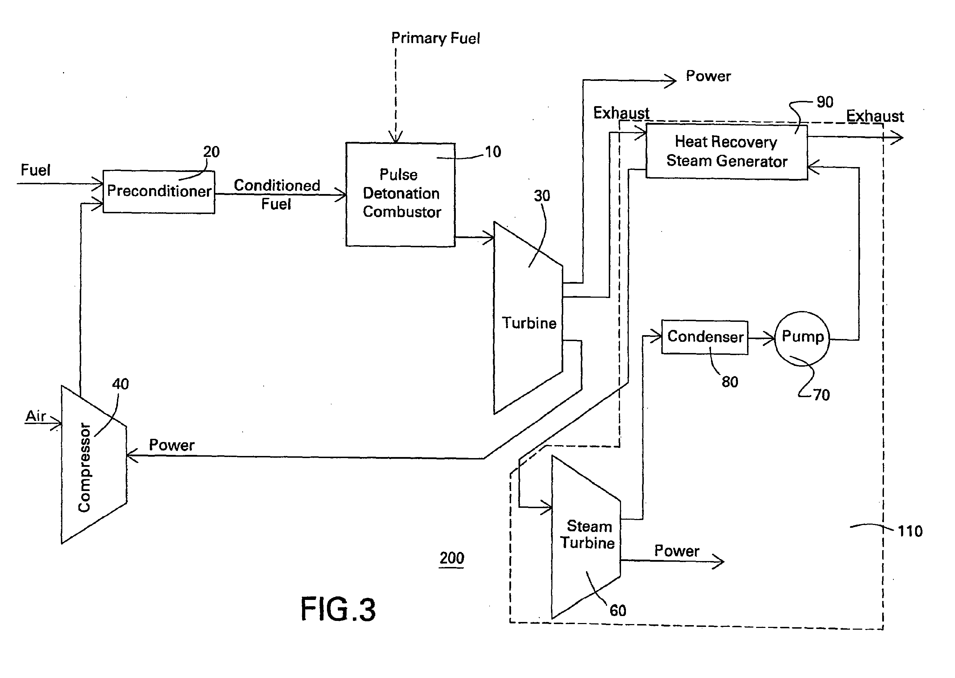

A combined cycle power system 200 embodiment is described with reference to Figure 3. As shown, the power system 200 includes the elements of the simple cycle power system 100 described above. In addition, power system 200 further includes a Rankine bottom cycle (or steam turbine bottoming cycle). As shown, the steam turbine assembly 110 is adapted to receive an exhaust stream from the turbine 30, to generate steam using the exhaust stream, and to generate power using the steam. Beneficially, incorporation of the steam turbine assembly 110 extracts additional power from waste heat from the simple cycle power system 100. For the particular embodiment depicted by Figure 3, the steam turbine assembly 110 includes a steam turbine 60, a condenser 80, and a pump 70. The steam turbine 60 is adapted to generate power using the steam. The condenser 80 is adapted to receive and condense an exhaust steam from the steam turbine 60 to supply a fluid stream. The pump 70 is adapted to receive and pump the fluid stream. More particularly, for the embodiment shown in Figure 3, the steam turbine assembly 110 further includes a heat recovery steam generator 90, which is adapted to receive the exhaust stream from turbine 30, to receive the fluid flow from pump 70, and to generate steam from the fluid flow using the exhaust stream.

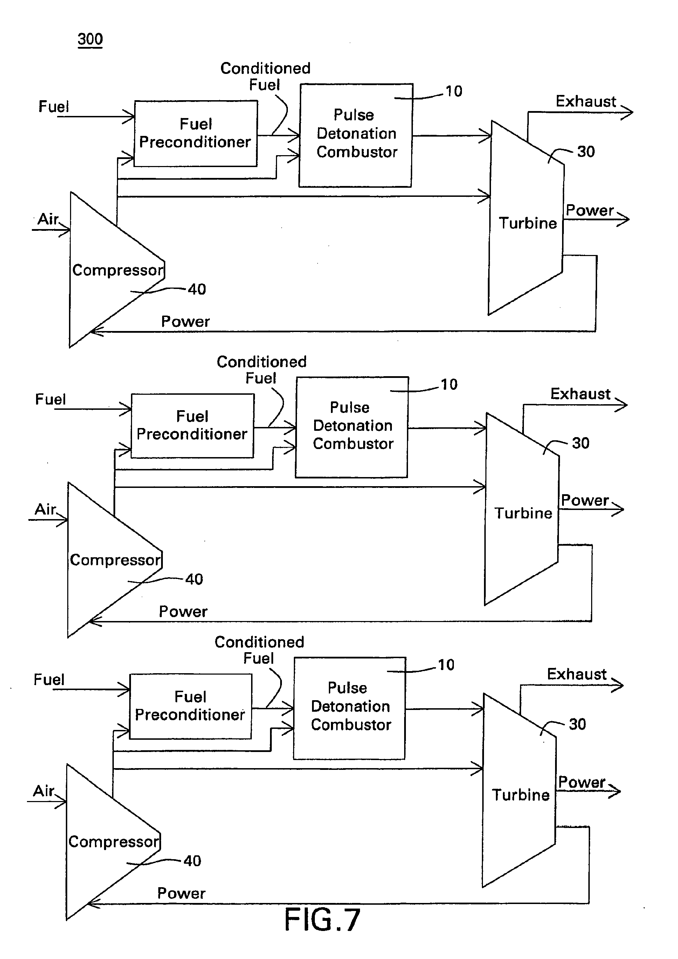

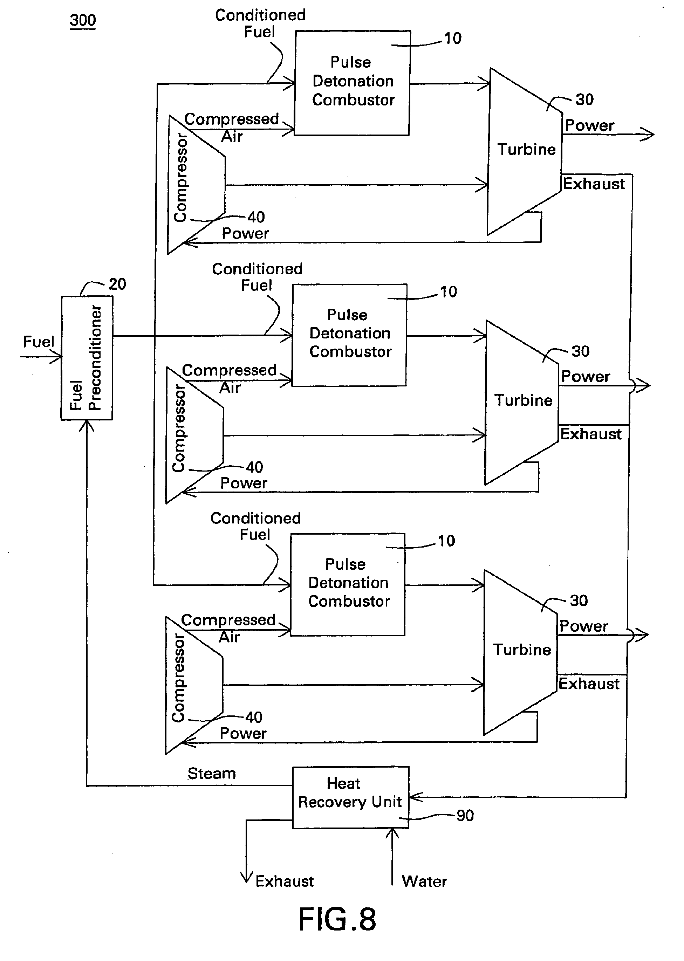

An exemplary power plant 300 embodiment of the invention is shown in Figures 7 and 8. As shown, the power plant 300 includes at least one fuel pre-conditioner 20 adapted to convert a fuel to at least one conditioned fuel. The power plant further includes a number of power systems 100. Each power system 100 includes a pulse detonation combustor 10 and a turbine 30 positioned downstream from the pulse detonation combustor 10, as discussed above with respect to Figure 1. For the particular embodiment of Figure 7, a separate fuel pre-conditioner 20 is provided for each of the power systems 100. Alternatively, one fuel pre-conditioner 20 may supply the conditioned fuel to two or more power systems 100, as shown for example in Figure 8. According to a more particular embodiment, the power plant 300 further includes at least one compressor 40 configured to supply air to at least one of the fuel pre-conditioner 20, the pulse detonation combustors 10, and the turbines 30. For the particular embodiment of Figures 7 and 8, a separate compressor 40 is provided for each of the pulse detonation combustors 10. Although not shown, one compressor 40 may supply compressed air to two or more pulse detonation combustors 10. In addition the exemplary power plant 300 shown in Figure 8 also includes a heat recovery unit 90, which is adapted to use exhaust heat from the turbines 30 to heat an intermediate liquid, such as water, to supply the heated liquid to fuel pre-conditioner 20, for example to supply steam to the fuel pre-conditioner 20.

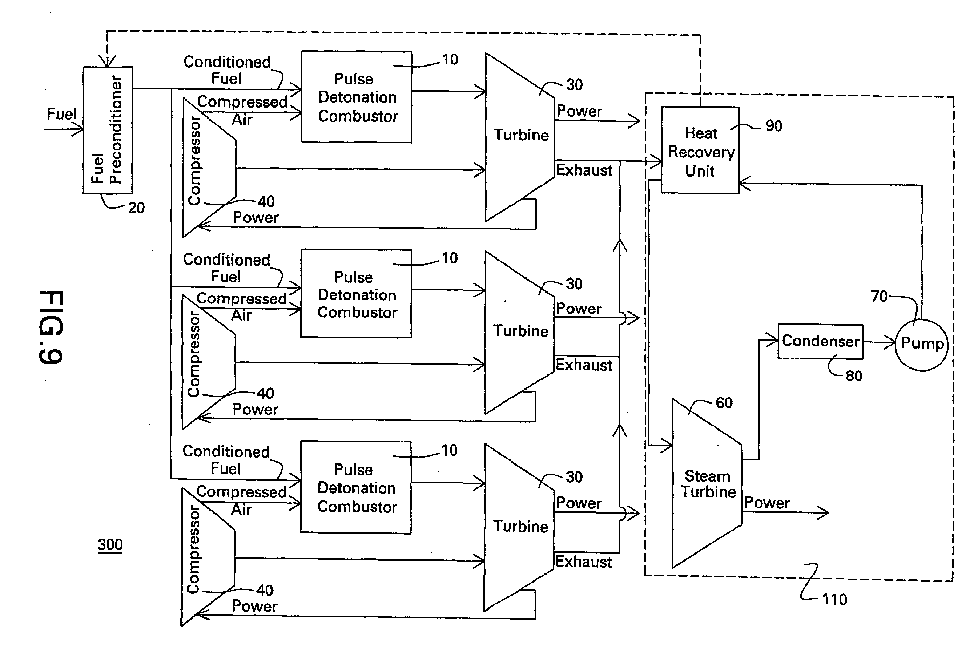

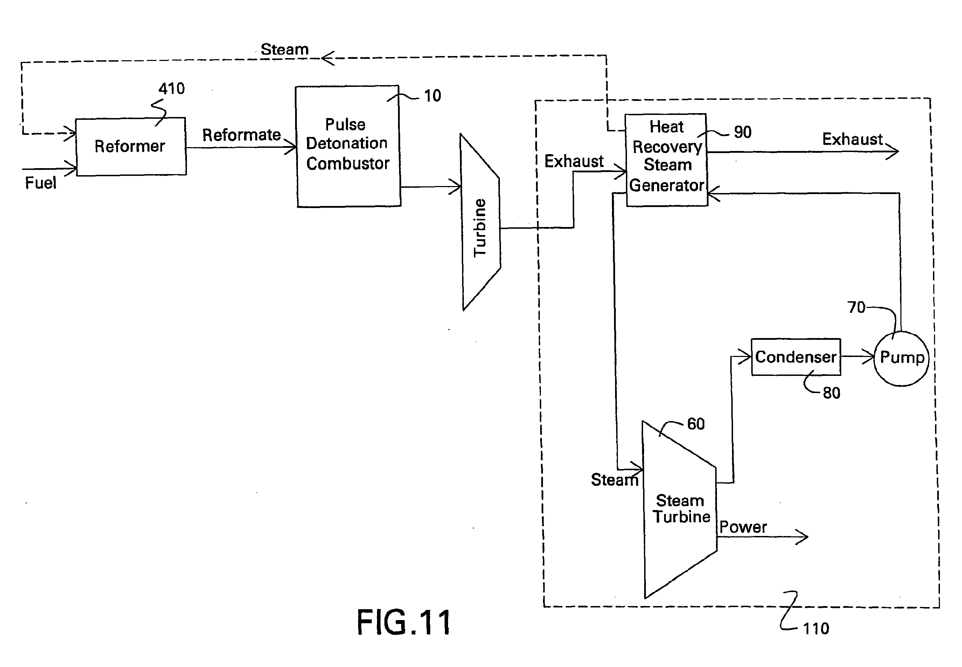

A combined cycle power plant 300 embodiment is described with reference to Figure 9. In addition to the components discussed above with respect to Figures 7 and 8, the power plant 300 further includes at least one steam turbine assembly 110, which is adapted to receive an exhaust stream from at least one of the turbines 30, to generate steam using the exhaust stream, and to generate power using the steam. The use of a single fuel pre-conditioner 20 and multiple compressors 40 in Figure 9 is exemplary. As discussed above with respect to Figures 7 and 8, separate fuel pre-conditioners 20 and/or compressors 40 may be employed for the power systems 100. For the exemplary embodiment shown in Figure 9, one steam turbine assembly 110 is adapted to receive exhaust streams from a number of turbines 30. Alternatively, several steam turbine assemblies 110 could be employed, depending on the size of the power plant 300. For the exemplary embodiment shown in Figure 9, the steam turbine assembly 110 includes a steam turbine 60, a condenser 80, a pump 70, and a heat recovery steam generator 90, as discussed in detail above with respect to Figure 3. In addition, the heat recovery steam generator 90 may be further adapted to supply steam to the fuel pre-conditioner 20, as indicated by a dashed line in Figure 9. For example, Figure 11 illustrates a combined cycle power system 600 that includes a reformer 410 that receives steam from the heat recovery steam generator 90.

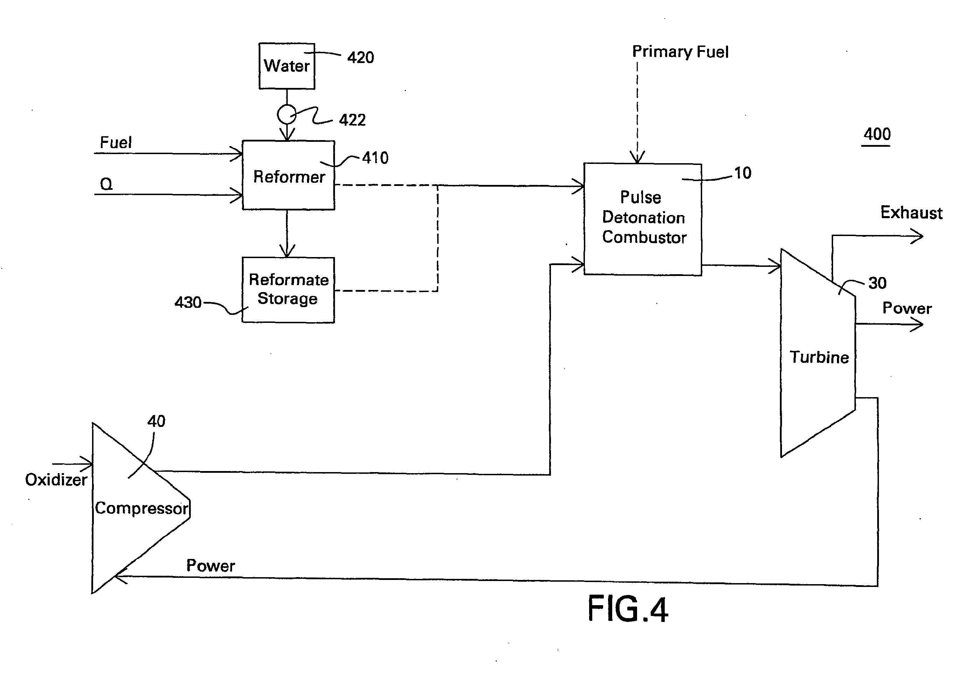

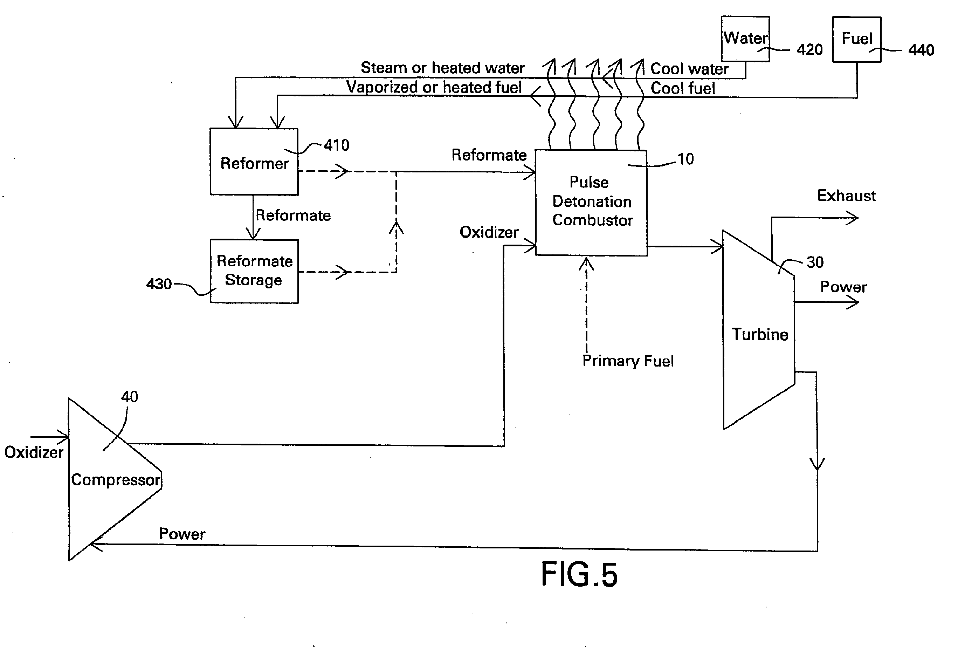

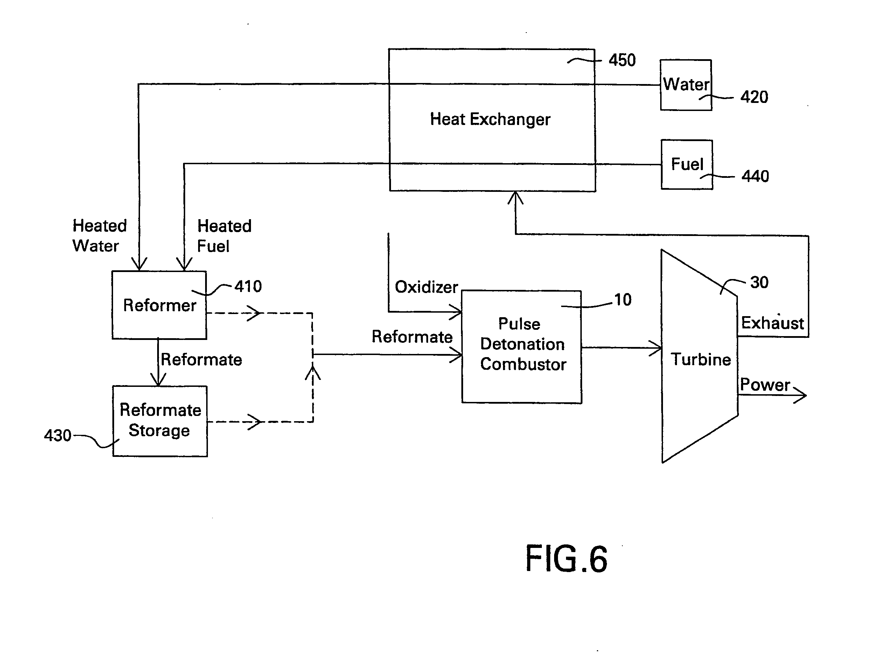

Another power system 400 embodiment is described with reference to Figures 4, 5 and 6. As shown in Figure 4, for example, the power system 400 includes a fuel pre-conditioner 20 comprising a reformer 410, which is adapted to receive and reform a fuel, to generate reformate. The "Q" in Figure 4 indicates the addition of energy to the reformer 410 via combustion/partial oxidation, electrical power, and/or heat. The power system 400 further includes a pulse detonation combustor 10 adapted to receive the reformate and an oxidizer, to detonate a mixture comprising the reformate and the oxidizer, and to exhaust a number of detonation products. Beneficially, by reforming the fuel, a more detonable fuel (reformate) is supplied to the pulse detonation combustor 10. For the exemplary embodiments of Figures 5 and 6, the power system 400 further includes a water source 420 adapted to supply the reformer 410 with water and a fuel source 440 adapted to supply reformer 410 with the fuel. The reformer 410 is adapted to reform the fuel using the water. Further, for the particular embodiment shown in Figure 4, the power system 400 further includes a pump 422, which is adapted to pump the water from the water source 420 to the reformer 410.

As used here, the term "reformer" refers to an apparatus for generating Hydrogen by the reaction of water and a re-formable fuel. Exemplary re-formable fuels include hydrocarbons, for example natural gas or distillate liquid fuels. Exemplary reformers 410 include catalytic reformers 410. In reforming water and hydrocarbon fuel mixtures, such reformers are typically operated in a temperature range of about 800 degrees Fahrenheit (800°F) to about fourteen hundred degrees Fahrenheit (1400°F), depending on the fuel and catalyst. The reformer reacts the water and fuel mixture to generate Hydrogen having quantities of water, methane, carbon dioxide, carbon monoxide and various trace materials entrained (collectively termed "reformate"). Although only one reformer 410 is depicted in Figures 4-6, it should be understood that two or more reformers 410 having like or different catalysts may be employed to more efficiently generate Hydrogen.

As shown in Figures 4-6, the power system 400 may also include a reformate holding unit 430, which is adapted to receive the reformate from the reformer 410 and to supply the reformate to the pulse detonation combustor 10. Alternatively, as indicated by the dashed lines in each of Figures 4-6, the reformate may be supplied directly to the pulse detonation combustor 10 from the reformer 410. The incorporation of reformate holding unit 430 into power system 400 depends on the capacity and throughput of the reformer 410 and on the fuel consumption rates of the pulse detonation combustor 10.

To enhance Hydrogen generation within reformer 410, it is desirable to preheat the water and/or fuel supplied to the reformer 410. For the particular embodiment shown in Figure 5, the pulse detonation combustor 10 is adapted to heat the fuel from the fuel source 440 and the water from the water source 420, so that the fuel and the water received by the reformer 410 are heated. By "warm fuel" in Figure 5, it is meant that the fuel is vaporized or heated, and the phrase "warm water" in Figure 5 includes both steam and heated water. In other words, for this embodiment, the fluids are sufficiently hot to promote reforming reactions. This heating may take place in a heat exchanger (not shown in Figure 5). Alternatively, the pulse detonation combustor 10 may heat an intermediate fluid (not shown) and indirectly heat the fuel and/or water via the intermediate fluid. For this latter embodiment, the water (in liquid or steam state) may serve as the intermediate fluid for heating the fuel. In other words, for this specific embodiment the pulse detonation combustor directly heats the water and indirectly heats the fuel via the heated water.

To generate power, the power system 400 includes a turbine 30 positioned downstream from the pulse detonation combustor 10, as shown, for example, in Figures 4-6. The turbine 30 is in flow communication with the pulse detonation combustor 10. For the particular embodiment illustrated by Figure 6, the power system 400 also includes a heat exchanger adapted to receive an exhaust stream from the turbine 30 to heat the fuel and the water. Although not shown, the heat exchanger 450 may also be adapted to heat either the fuel or the water supplied to the reformer.

The power system 400 may be configured to detonate (1) a mixture comprising the reformate and the oxidizer, (2) a mixture comprising the reformate, a primary fuel (for example, a hydrocarbon fuel, such as natural gas), and the oxidizer, (3) a mixture comprising the reformate, the oxidizer, and a second oxidizer (for example Oxygen or an Oxygen enriched stream), or (4) a mixture comprising the reformate, the oxidizer, a primary fuel, and the second oxidizer. According to a particular embodiment, the pulse detonation combustor 10 is further adapted to receive a primary fuel (as indicated in Figures 4 and 5 by dashed lines, for example) and to detonate a mixture comprising the primary fuel, the reformate, and the oxidizer and exhaust the detonation products.

Another power system 500 embodiment is described with reference to Figure 10. As shown in Figure 10, the power system 500 includes an Oxygen enrichment unit 50 adapted to receive air and to supply an Oxygen enriched stream. Exemplary Oxygen contents for the Oxygen enriched stream are in a range of about fifty to about ninety percent (50-90%). A pulse detonation combustor 10 is adapted to receive a fuel and the Oxygen enriched stream, to detonate a mixture comprising the fuel and the Oxygen enriched stream, and exhaust a number of detonation products. A turbine 30 is positioned downstream from the pulse detonation combustor 10, the turbine being in flow communication with the pulse detonation combustor 10.

Exemplary Oxygen enrichment units 50 include air separation units or membrane systems. These units are known systems for Oxygen enrichment, and air separation units are conventionally used, for example, in integrated gasification combined cycle coal (IGCC) plants.

For the particular embodiment of Figure 10, the Oxygen enrichment unit 50 is further adapted to supply a Nitrogen enriched stream, and the turbine is adapted to receive the Nitrogen enriched stream. Beneficially this Nitrogen enriched stream functions both as a cooling stream to cool the turbine stage parts and to help drive the turbine. Moreover, although not expressly shown in Figure 10, at least a portion of the Nitrogen enriched stream may be used to cool the pulse detonation combustor 10.

More particularly, the power system 500 also includes a fuel pre-conditioner 20 adapted to convert a base fuel to at least one conditioned fuel, such that the fuel received and detonated by the pulse detonation combustor 10 includes the conditioned fuel as indicated in Figure 10. In addition, the pulse detonation combustor 10 may be further adapted to receive a primary fuel as indicated by a dashed line in Figure 10. For this embodiment, the fuel received and detonated by the pulse detonation combustor comprises the conditioned fuel and the primary fuel. As discussed above, an exemplary fuel pre-conditioner 20 is a reformer 410, which is adapted to receive and reform a base fuel and to generate a reformate. For this particular embodiment, the fuel received and detonated by the pulse detonation combustor 10 includes the reformate.

The power system 500 embodiment of Figure 10 further includes a compressor 40 configured to supply compressed air to at least one of the fuel pre-conditioner 20, pulse detonation combustor 10, and turbine 30. For the particular embodiment shown in Figure 10, the compressor 40 is adapted to supply compressed air to the pulse detonation combustor 10, and the pulse detonation combustor is adapted to detonate a mixture comprising the conditioned fuel, the Oxygen enriched stream, and the compressed air and exhaust a plurality of detonation products. According to one example, the Oxygen enriched stream constitutes only a small percentage of the air mass flow, for example such that about two percent (2%) of the air mass flow is Oxygen.

## Claims

1. A power system (100) comprising:
a fuel pre-conditioner (20) adapted to convert a fuel to at least one conditioned fuel;
a pulse detonation combustor (10) adapted to receive the conditioned fuel and a primary oxidizer and to detonate a mixture comprising the conditioned fuel and the primary oxidizer and exhaust a plurality of detonation products; and
a turbine (30) positioned downstream from said pulse detonation combustor (10), said turbine being in flow communication with said pulse detonation combustor.

2. The power system (100) of Claim 1, wherein said fuel pre-conditioner (20) comprises a heat source (22) configured to heat the fuel so as to pyrolyze the fuel.

3. The power system (100) of Claim 2, wherein said fuel pre-conditioner (20) further comprises a catalyst (26) adapted to enhance the pyrolysis of the fuel.

4. The power system (100) of Claim 1, wherein said fuel pre-conditioner (20) comprises a plasma source (24) configured to pyrolyze the fuel.

5. The power system (100) of Claim 1, wherein said fuel pre-conditioner (20) comprises a catalyst (26) adapted to pyrolyze the fuel.

6. The power system (100) of Claim 1, wherein said pulse detonation combustor (10) is further adapted to receive a primary fuel and to detonate a mixture comprising the conditioned fuel, the primary fuel and the primary oxidizer and exhaust a plurality of detonation products.

7. The power system (100) of Claim 6, wherein the primary fuel comprises a hydrocarbon fuel, and wherein the fuel comprises a hydrocarbon fuel.

8. The power system (100) of Claim 1, further comprising a compressor (40) configured to supply air to at least one of said fuel pre-conditioner (20), said pulse detonation combustor, and said turbine (30).

9. The power system (200) of Claim 1, further comprising a steam turbine assembly (110) adapted to receive an exhaust stream from said turbine (30), to generate steam using the exhaust stream, and to generate power using the steam, wherein said steam turbine assembly comprises:
a steam turbine (60) adapted to generate power using the steam;
a condenser (80) adapted to receive and condense an exhaust steam from said steam turbine to supply a fluid stream; and a pump (70) adapted to receive and pump the fluid stream.

10. The power system (200) of Claim 9, wherein said steam turbine assembly (110) further comprises a heat recovery steam generator (90) adapted to receive the exhaust stream from said turbine (30), to receive the fluid flow from said pump (70), and to generate steam from the fluid flow using the exhaust stream.

11. The power system (100) of Claim 1, wherein said fuel pre-conditioner (20) comprises a reformer (410) adapted to receive and reform a base fuel and to generate a reformate, and wherein the conditioned fuel received and detonated by said pulse detonation combustor (10) comprises the reformate.
